# EUROPÄISCHE PATENTSCHRIFT

(11) **EP 2 205 686 B1**
(45) Veröffentlichungstag und Bekanntmachung des Hinweises auf die Patenterteilung: **16.03.2011**
(21) Anmeldenummer: 08845973.0
(22) Anmeldetag: 29.10.2008
(51) Int. Cl.: C09D 11/00, C08G 64/16, B29C 45/16

(54) **VERFAHREN ZUR HERSTELLUNG EINES POLYCARBONAT-SCHICHTVERBUNDES**
METHOD FOR THE PRODUCTION OF A POLYCARBONATE LAMINATE
PROCÉDÉ DE FABRICATION D'UN COMPOSITE STRATIFIÉ DE POLYCARBONATE

(30) Priorität: 31.10.2007 DE 102007052947
(43) Veröffentlichungstag der Anmeldung: 14.07.2010
(73) Patentinhaber: Bundesdruckerei GmbH, 10958 Berlin (DE); Bayer Material Science AG, 51368 Leverkusen (DE)
(72) Erfinder: MUTH, Oliver, 12277 Berlin (DE); MATHEA, Arthur, 14199 Berlin (DE); PFLUGHOEFFT, Malte, 13347 Berlin (DE); EHREKE, Jens, 12587 Berlin (DE); PAESCHKE, Manfred, 16352 Berlin (DE); PUDLEINER, Heinz, 47800 Krefeld (DE); YESILDAG, Cengiz, 51377 Leverkusen (DE); MEYER, Klaus, 41539 Dormagen (DE)
(74) Vertreter: Jungblut, Bernhard Jakob
(86) Internationale Anmeldenummer: PCT/DE2008/001751
(87) Internationale Veröffentlichungsnummer: WO 2009/056110

(56) Entgegenhaltungen:
- EP-A- 1 493 786
- DE-A1- 4 421 561
- DE-A1- 19 832 570
- US-A1- 2004 191 521
- DATABASE WPI Week 200482 Thomson Scientific, London, GB; AN 2004-825180 XP002517364 & JP 2004 315765 A (IDEMITSU KOSAN CO LTD) 11. November 2004 (2004-11-11)

## Beschreibung

### Gebiet der Erfindung

Die Erfindung betrifft eine Verwendung einer Zubereitung enthaltend: A) 0,1 bis 20 Gew.-% eines organischen Polymers, B) 30 bis 99,9 Gew.-% eines Lösungsmittels, C) 0 bis 10 Gew.-%, bezogen auf Trockenmasse, eines Farbmittels oder Farbmittelgemischs, D) 0 bis 10 Gew.-% eines funktionales Materials oder einer Mischung funktionaler Materialien, E) 0 bis 30 Gew.-% Additive und/oder Hilfsstoffe, oder einer Mischung solcher Stoffe, wobei die Summe der Komponenten A) bis E) stets 100 Gew.-% ergibt, als Tintenstrahldruckfarbe.

Die Erfindung betrifft des Weiteren ein Verfahren zur Herstellung eines Verbundes mit einer zwischen zwei Polycarbonatschichten angeordneten Tintenstrahldruckschicht, einen mittels eines solchen Verfahrens erhältlichen Verbund, die Verwendung eines solchen Verfahren zur Herstellung eines Sicherheits- und/oder Wertdokuments, sowie ein dergestalt herstellbares Sicherheits- und/oder Wertdokument.

### Hintergrund der Erfindung und Stand der Technik

Eine Zubereitung zur Verwendung als Tinte im Tintenstrahldruck ist beispielsweise aus der Literaturstelle EP 1690903 A bekannt. Dabei handelt es sich um eine wäßrige Tinte zur Verwendung auf saugendem Substrat, wie beispielsweise Briefumschlägen. Sofern ein organisches Polymer vorgesehen ist, dient dies nicht als Bindemittel, sondern als Additiv zur Viskositätseinstellung. Solche Tinten sind für eine Bedruckung von Polycarbonatfolien unbrauchbar aus den folgend zu papierbasierten Sicherheits- und/oder Wertdokumenten erläuterten Gründen.

Eine Personalisierung von PC-(Polycarbonat-) basierten Sicherheits- und/oder Wertdokumenten erfolgt in der Praxis mittels des sogenannte Laser-engraving Verfahren, bei dem über optisch/thermische Wechselwirkungen eines Werkstoffes des Sicherheits- und/oder Wertdokuments mit der Laserstrahlung örtlich hoch aufgelöste Pyrolysevorgänge erzeugt werden und so lokale Schwärzungen infolge von Kohlenstoffbildung auftreten. Nachteil dieses Verfahrens ist die Beschränkung auf Schwarz-Weiß oder bestenfalls Graustufendarstellungen.

Eine für papierbasierte Dokumente etablierte farbige Personalisierung im Tintenstrahldruckverfahren hat sich bislang für PC-basierte Sicherheits- und/oder Wertdokumente nicht durchsetzen können. Dies liegt zum Ersten an einer mangelnden Kompatibilität der verwendeten Polymere/Binder (in Verbindung mit den übrigen Tintenbestandteilen wie Farbmittel, Additive, Lösungsmittel) mit Polycarbonat. Dies trifft beispielsweise auf die aus den Literaturstellen Ullmann's Encyclopedia of Industrial Chemistry, Electronic Release 2007, Wiley Verlag, Kapitel "Imaging Technology, Ink-Jet Inks, sowie Ullmann's Encyclopedia of Industrial Chemistry, Electronic Release 2007, Wiley Verlag, Kapitel "Paints and Coatings" bekannte Binder, wie Nitrocellulose, Celluloseester (Cellulose Acetat Butyrat, CAB), Polyacrylate, Polyester, Epoxide u.v.m. zu. Zum Zweiten sind mit solchen Tinten bedruckte PC-Folien schlecht laminierbar. Vollflächig bedruckte PC-Folien lassen sich praktisch überhaupt nicht laminieren, denn die Farbschicht stellt eine Trennschicht dar. Bei einer nur teilweisen Bedruckung besteht die Gefahr einer lokalen Delaminierung. Zum Dritten ist Polycarbonat ist kein saugender Untergrund. Herkömmliche Tinten für den Tintenstrahldruck sind auf gute Wegschlagzeiten auf Papier eingestellt und bei einem Aufdruck auf eine nicht saugende PC-Folie bleiben sie auf der Oberfläche "stehen" und lassen sich auch nach Trocknung mitunter komplett ohne Rückstände abkratzen, da die Farbe nicht in das Material penetriert. Zum Vierten zeigen Tintenstrahldruckschichten aus insofern bekannten Tinten eine mangelnde Temperaturbeständigkeit. Da im Bereich der Sicherheits- und/oder Wertdokumente bedruckte PC-Folien typischerweise unter Einwirkung von Druck (> 2 bar) und Temperatur (>160 °C) miteinander laminiert werden, besteht die Gefahr der Verfärbung der Tintenstrahldruckschicht. "

Aus der Literaturstelle EP 0 688 839 B1 sind Siebdruckfarben auf der Basis disubstituierter Dihydroxidiphenylcycloalkane bekannt. Dieser Literaturstelle sind auch Verfahren zur Herstellung solcher Polycarbonate entnehmbar. Diese Literaturstelle wird hiermit vollumfänglich in den Offenbarungsgehalt der vorliegenden Anmeldung aufgenommen. Siebdruckfarben sind jedoch in aller Regel nicht ohne weiteres im Tintenstrahldruck verwendbar, da der Tintenstrahldruck besondere Anforderungen an die verwendeten Tinten auf Grund der Düsentechnologie der Druckköpfe stellt.

### Technisches Problem der Erfindung

Der Erfindung liegt daher das technische Problem zu Grunde, Mittel anzugeben, welche die Anwendung des Tintenstrahldrucks im Rahmen der Herstellung eines Sicherheits- und/oder Wertdokuments auf Basis von Polycarbonat-Polymerschichten erlaubt und Tintenstrahldruckschichten auf solchen Schichten liefert, die allen optischen Ansprüchen genügen, insbesondere auch farbig sein können, wobei im Zuge einer Lamination die optischen Eigenschaften nicht beeinträchtigt werden, und die bei der Lamination nicht als Trennschicht wirkt, sondern vielmehr zur Bildung eines monolithischen Verbundes aus den Polymerschichten sogar beiträgt.

### Grundzüge der Erfindung und bevorzugte Ausführungsformen

Zur Lösung dieses technischen Problems lehrt die Erfindung Verwendung einer Zubereitung enthaltend: A) 0,1 bis 20 Gew.-% eines Bindemittels mit einem Polycarbonatderivat auf Basis eines geminal disubstituierten Dihydroxydiphenylcycloalkans, B) 30 bis 99,9 Gew.-% eines vorzugsweise organischen Lösungsmittels oder Lösungsmittelgemischs, C) 0 bis 10 Gew.-%, bezogen auf Trockenmasse, eines Farbmittels oder Farbmittelgemischs, D) 0 bis 10 Gew.-% eines funktionales Materials oder einer Mischung funktionaler Materialien, E) 0 bis 30 Gew.-% Additive und/oder Hilfsstoffe, oder einer Mischung solcher Stoffe, wobei die Summe der Komponenten A) bis E) stets 100 Gew.-% ergibt, als Tintenstrahldruckfarbe.

Die Erfindung beruht zunächst auf der Erkenntnis, dass erfindungsgemäß eingesetzte Polycarbonatderivate hochkompatibel mit Polycarbonatwerkstoffen für Folien, insbesondere mit Polycarbonaten auf Basis Bisphenol A, wie beispielsweise Makrofol® Folien, sind. Die hohe Kompatibilität zeigt sich darin, dass sich die erfindungsgemäß eingebrachte Tintenstrahldruckschicht mit einem Polycarbonatderivat mit den Polycarbonatwerkstoffen der Folien zu einem monolithischen Verbund fügt. Eine Schichtgrenze zwischen den Materialien ist nach dem Laminieren optisch nicht mehr zu detektieren. Hinzu kommt, dass das eingesetzte Polycarbonatderivat hochtemperaturstabil ist und keinerlei Verfärbungen bei laminationstypischen Temperaturen bis zu 200 °C und mehr zeigt. Des Weiteren ist es überraschend, dass eine für den Siebdruck bekannte Farbzusammensetzung (unter Anpassung der Viskosität) hinsichtlich des verwendeten Binders auch für den Tintenstrahldruck geeignet ist. Schließlich wurde als vorteilhafte Eigenschaft festgestellt, dass die Farbmittel der Zusammensetzung in die bedruckte Polymerschicht penetrieren, so dass eine auf der Oberfläche der Polymerschicht aufgebrachte Druckschicht nicht zerstörungsfrei entfernt werden kann. Somit eignen sich erfindungsgemäß verwendete Zusammensetzungen z.B. auch für die Oberflächenpersonalisierung von Sicherheits- und/oder Wertdokumenten, da sich bei der Bedruckung der Polymerschicht ein integraler Verbund ausbildet.

Im Ergebnis wird mit der Erfindung erreicht, dass ein Sicherheits- und/oder Wertdokument auf Basis von Polycarbonatfolien mit einer farbigen Bedruckung, beispielsweise im Zuge der Personalisierung als Passbild, versehen werden kann, wobei die Tintenstrahldruckschicht nicht nur nicht als Trennschicht wirkt, sondern vielmehr die Bildung eines monolithischen Verbundes im Zuge des Laminierens sogar noch fördert. Der Verbund genügt in Hinblick auf Integrität und Haltbarkeit allen Anforderungen.

Im Einzelnen kann das Polycarbonatderivat funktionelle Carbonatstruktureinheiten der Formel (I) enthalten, 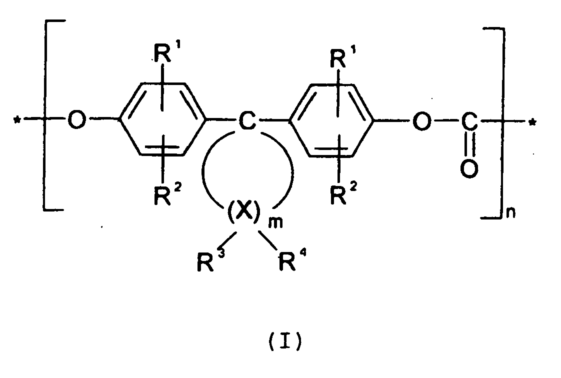 worin R¹ und R² unabhängig voneinander Wasserstoff, Halogen, bevorzugt Chlor oder Brom, C₁-C₈-Alkyl, C₅-C₆-Cycloalkyl, C₆-C₁₀-Aryl, bevorzugt Phenyl, und C₇-C₁₂-Aralkyl, bevorzugt Phenyl-C₁-C₄-Alkyl, insbesondere Benzyl; m eine ganze Zahl von 4 bis 7, bevorzugt 4 oder 5; R³ und R⁴ für jedes X individuell wählbar, unabhängig voneinander Wasserstoff oder C₁-C₆-Alkyl; X Kohlenstoff und n eine ganze Zahl größer 20 bedeuten, mit der Maßgabe, däss an mindestens einem Atom X, R³ und R⁴ gleichzeitig Alkyl bedeuten.

Bevorzugt ist es, wenn an 1 bis 2 Atomen X, insbesondere nur an einem Atom X, R³ und R⁴ gleichzeitig Alkyl sind. R³ und R⁴ können insbesondere Methyl sein. Die X-Atome in alpha-Stellung zu dem Diphenyl-substituierten C-Atom (C1) können nicht dialkylsubstituiert sein. Die X-Atome in beta-Stellung zu C1 können mit Alkyl disubstituiert sein. Bevorzugt ist m = 4 oder 5. Das Polycarbonatderivat kann beispielsweise auf Basis von Monmeren, wie 4,4'-(3,3,5-trimethylcyclohexan-1,1-diyl)diphenol, 4,4'-(3,3-dimethylcyclohexan-1,1-diyl)diphenol, oder 4,4'-(2,4,4-trimethylcyclopentan-1,1-diyl)diphenol gebildet sein.

Ein erfindungsgemäß eingesetztes Polycarbonatderivat kann beispielsweise gemäß der Literaturstelle DE 38 32 396.6 aus Diphenolen der Formel (Ia) hergestellt werden, deren Offenbarungsgehalt hiermit vollumfänglich in den Offenbarungsgehalt dieser Beschreibung aufgenommen wird.

Es können sowohl ein Diphenol der Formel (Ia) unter Bildung von Homopolycarbonaten als auch mehrere Diphenole der Formel (Ia) unter Bildung von Copolycarbonaten verwendet werden (Bedeutung von Resten, Gruppen und Parametern, wie in Formel I).

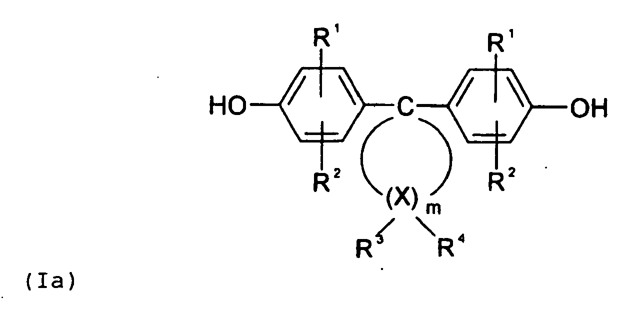

Außerdem können die Diphenole der Formel (Ia) auch im Gemisch mit anderen Diphenolen, beispielsweise mit denen der Formel (Ib)

HO - Z - OH (Ib),

zur Herstellung von hochmolekularen, thermoplastischen, aromatischen Polycarbonatderivaten verwendet werden.

Geeignete andere Diphenole der Formel (Ib) sind solche, in denen Z ein aromatischer Rest mit 6 bis 30 C-Atomen ist, der einen oder mehrere aromatische Kerne enthalten kann, substituiert sein kann und aliphatische Reste oder andere cycloaliphatische Reste als die der Formel (Ia) oder Heteroatome als Brückenglieder enthalten kann.

Beispiele der Diphenole der Formel (Ib) sind: Hydrochinon, Resorcin, Dihydroxydiphenyle, Bi-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, alpha , alpha '-Bis-(hydroxyphenyl)-diisopropylbenzole sowie deren kernalkylierte und kernhalogenierte Verbindungen.

Diese und weitere geeignete Diphenole sind z.B. in den Literaturstellen US-A 3 028 365; 2 999 835, 3 148 172, 3 275 601, 2 991 273, 3 271 367, 3 062 781, 2 970 131 und 2 999 846, in den Literaturstellen DE-A 1 570 703, 2 063 050, 2 063 052, 2 211 956, der Fr-A 1 561 518 und in der Monographie "H. Schnell, Chemistry and Physics of Polycarbonates, Interscience Publishers, New York 1969", beschrieben, welche hiermit vollumfänglich in den Offenbarungsgehalt der vorliegenden Anmeldung aufgenommen werden.

Bevorzugte andere Diphenole sind beispielsweise: 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, alpha , alpha -Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-cyclohexan, alpha , alpha -Bis-(3,5-dimethyl-4-hydroxyphenyl)-p-diisopropylbenzol, 2,2-Bis-(3,5-dichlor-4-hydroxyphenyl)-propan und 2,2-Bis-(3,5-dibrom-4-hydroxyphenyl)-propan.

Besonders bevorzugte Diphenole der Formel (Ib) sind beispielsweise: 2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-9-hydroxyphenyl)-propan und 1,1-Bis-(4-hydroxyphenyl)-cyclohexan. Insbesondere ist 2,2-Bis-(4-hydroxyphenyl)-propan bevorzugt. Die anderen Diphenole können sowohl einzeln als auch im Gemisch eingesetzt werden.

Das molare Verhältnis von Diphenolen der Formel (Ia) zu den gegebenenfalls mitzuverwendenden anderen Diphenolen der Formel (Ib), soll zwischen 100 Mol-% (Ia) zu 0 Mol-% (Ib) und 2 Mol-% (Ia) zu 98 Mol-% (Ib), vorzugsweise zwischen 100 Mol-% (Ia) zu 0 Mol-% (Ib) und 10 Mol-% (Ia) zu 90 Mol-% (Ib) und insbesondere zwischen 100 Mol-% (Ia) zu 0 Mol-% (Ib) und 30 Mol-% (Ia) zu 70 Mol-% (Ib) liegen.

Die hochmolekularen Polycarbonatderivate aus den Diphenolen der Formel (Ia), gegebenenfalls in Kombination mit anderen Diphenolen, können nach den bekannten Polycarbonat-Herstellungsverfahren hergestellt werden. Dabei können die verschiedenen Diphenole sowohl statistisch als auch blockweise miteinander verknüpft sein.

Die erfindungsgemäß eingesetzten Polycarbonatderivate können in an sich bekannter Weise verzweigt sein. Wenn die Verzweigung gewünscht wird, kann sich in bekannter Weise durch Einkondensieren geringer Mengen, vorzugsweise Mengen zwischen 0,05 und 2,0 Mol-% (bezogen auf eingesetzte Diphenole), an drei- oder mehr als dreifunktionellen Verbindungen, insbesondere solchen mit drei oder mehr als drei phenolischen Hydroxylgruppen, erreicht werden. Einige Verzweiger mit drei oder mehr als drei phenolischen Hydroxylgruppen sind: Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(9-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-is-(2-hydroxy-5-methyl-denzyl)-9-methylphenol, 2-(4-hydroxyphenyl)-2-(2,4-dihydroxyphenyl)-propan, Hexa-[4-(4-hydroxyphenyl-isopropyl)-phenyl]-orthoterephthalsäureester, Tetra-(4-hydroxyphenyl)-methan, Tetra-[4-(4-hydroxyphenyl-isopropyl)phenoxy]-methan und 1,4-Bis-[4',4"-dihydroxytriphenyl)-methyl]-benzol. Einige der sonstigen dreifunktionellen Verbindungen sind 2,4-Dihydroxybenzoesäure, Trimesinsäure, Cyanurchlorid und 3,3-Bis-(3-methyl-9-hydroxyphenyl)-2-oxo-2,3-dihydroindol.

Als Kettenabbrecher zur an sich bekannten Regelung des Molekulargewichts der Polycarbonatderivate dienen monofunktionelle Verbindungen in üblichen Konzentraten. Geeignete Verbindungen sind z.B. Phenol, tert.-Butylphenole oder andere Alkyl-substituierte Phenole. Zur Regelung des Molekulargewichts sind insbesondere kleine Mengen Phenole der Formel (Ic) geeignet 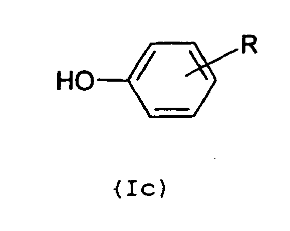 worin R einen verzweigten C₈- und/oder C₉-alkylrest darstellt.

Bevorzugt ist im Alkylrest R der Anteil an CH₃-Protonen zwischen 47 und 89 % und der Anteil der CH- und CH₂-Protonen zwischen 53 und 11 %; ebenfalls bevorzugt ist R in o- und/oder p-Stellung zur OH-Gruppe, und besonders bevorzugt die obere Grenze des ortho-Anteils 20 %. Die Kettenabbrecher werden im allgemeinen in Mengen von 0,5 bis 10, bevorzugt 1,5 bis 8 Mol-%, bezogen auf eingesetzte Diphenole, eingesetzt.

Die Polycarbonatderivate können vorzugsweise nach dem Phasengrenzflächenverhalten (vgl. H. Schnell "Chemistry and Physics of Polycarbonates", Polymer Reviews, Vol. IX, Seite 33ff., Interscience Publ. 1964) in an sich bekannter Weise hergestellt werden.

Hierbei werden die Diphenole der Formel (Ia) in wässrig alkalischer Phase gelöst. Zur Herstellung von Copolycarbonaten mit anderen Diphenolen werden Gemische von Diphenolen der Formel (Ia) und den anderen Diphenolen, beispielsweise denen der Formel (Ib), eingesetzt. Zur Regulierung des Molekulargewichts können Kettenabbrecher z.B. der Formel (Ic) zugegeben werden. Dann wird in Gegenwart einer inerten, vorzugsweise Polycarbonat lösenden, organischen Phase mit Phosgen nach der Methode der Phasengrenzflächenkondensation umgesetzt. Die Reaktionstemperatur liegt zwischen 0°C und 40°C.

Die gegebenenfalls mitverwendeten Verzweiger (bevorzugt 0,05 bis 2,0 Mol-%) können entweder mit den Diphenolen in der wässrig alkalischen Phase vorgelegt werden oder in dem organischen Lösungsmittel gelöst vor Phosgenierung zugegeben werden. Neben den Diphenolen der Formel (Ia) und gegebenenfalls anderen Diphenolen (Ib) können auch deren Mono- und/oder Bis-chlorkohlensäureester mitverwendet werden, wobei diese in organischen Lösungsmitteln gelöst zugegeben werden. Die Menge an Kettenabbrechern sowie an Verzweigern richtet sich dann nach der molaren Menge von Diphenolat-Resten entsprechend Formel (Ia) und gegebenenfalls Formel (Ib); bei Mitverwendung von Chlorkohlensäureestern kann die Phosgenmenge in bekannter Weise entsprechend reduziert werden.

Geeignete organische Lösungsmittel für die Kettenabbrecher sowie gegebenenfalls für die Verzweiger und die Chlorkohlensäureester sind beispielsweise Methylenchlorid, Chlorbenzol sowie insbesondere Mischungen aus Methylenchlorid und Chlorbenzol. Gegebenenfalls können die verwendeten Kettenabbrecher und Verzweiger im gleichen Solvens gelöst werden.

Als organische Phase für die Phasengrenzflächenpolykondensation dient beispielsweise Methylenchlorid, Chlorbenzol sowie Mischungen aus Methylenchlorid und Chlorbenzol.

Als wässrige alkalische Phase dient beispielsweise NaOH-Lösung. Die Herstellung der Polycarbonatderivate nach dem Phasengrenzflächenverfahren kann in üblicher Weise durch Katalysatoren wie tertiäre Amine, insbesondere tertiäre aliphatische Amine wie Tributylamin oder Triethylamin katalysiert werden; die Katalysatoren können in Mengen von 0,05 bis 10 Mol-%, bezogen auf Mole an eingesetzten Diphenolen, eingesetzt werden. Die Katalysatoren können vor Beginn der Phosgenierung oder während oder auch nach der Phosgenierung zugesetzt werden.

Die Polycarbonatderivate können nach dem bekannten Verfahren in homogener Phase, dem sogenannten "Pyridinverfahren" sowie nach dem bekannten Schmelzeumesterungsverfahren unter Verwendung von beispielsweise Diphenylcarbonat anstelle von Phosgen hergestellt werden.

Die Polycarbonatderivate können linear oder verzweigt sein, sie sind Homopolycarbonate oder Copolycarbonate auf Basis der Diphenole der Formel (Ia).

Durch die beliebige Komposition mit anderen Diphenolen, insbesondere mit denen der Formel (Ib) lassen sich die Polycarbonateigenschaften in günstiger Weise variieren. In solchen Copolycarbonaten sind die Diphenole der Formel (Ia) in Mengen von 100 Mol-% bis 2 Mol-%, vorzugsweise in Mengen von 100 Mol-% bis 10 Mol-% und insbesondere in Mengen von 100 Mol-% bis 30 Mol-%, bezogen auf die Gesamtmenge von 100 Mol-% an Diphenoleinheiten, in Polycarbonatderivaten enthalten.

Eine besonders vorteilhafte Ausführungsform der Erfindung ist dadurch gekennzeichnet, dass das Polycarbonatderivat ein Copolymer enthaltend, insbesondere bestehend aus, Monomereinheiten M1 auf Basis der Formel (Ib),vorzugsweise Bisphenol A, sowie Monomereinheiten M2 auf Basis des geminal disubstituierten Dihydroxydiphenylcycloalkans, vorzugsweise des 4,4'-(3,3,5-trimethylcyclohexan-1,1-diyl)diphenols, ist, wobei das Molverhältnis M2/M1 vorzugsweise größer als 0,3, insbesondere größer als 0,4, beispielsweise größer als 0,5 ist. Denn bei solchen Copolymeren wurde überraschenderweise festgestellt, dass die Glastemperatur nach einem ersten Aufheizzyklus von T_{g} unter 150 °C bei einem zweiten Aufheizzyklus erhöht sein kann, was die Stabilität des erhaltenen Verbundes deutlich erhöhen kann.

Bevorzugt ist es, wenn das Polycarbonatderivat ein mittleres Molekulargewicht (Gewichtsmittel) von mindestens 10.000, vorzugsweise von 20.000 bis 300.000, aufweist.

Die Komponente B kann grundsätzlich im Wesentlichen organisch oder wäßrig sein. Im Wesentlichen wäßrig meint dabei, dass bis zu 20 Gew.-% der Komponente B) organische Lösungsmittel sein können. Im Wesentlichen organisch meint, dass bis zu 5 Gew.-% Wasser in der Komponente B) vorliegen können. Vorzugsweise enthält die Komponente B einen bzw. besteht aus einem flüssigen aliphatischen, cycloaliphatischen, und/oder aromatischen Kohlenwasserstoff, einem flüssigem organischen Ester, und/oder einer Mischung solcher Substanzen. Die eingesetzten organischen Lösungsmittel sind vorzugsweise halogenfreie organische Lösungsmittel. In Frage kommen insbesondere aliphatische, cycloaliphatische, aromatische Kohlenwasserstoffe, wie Mesitylen, 1,2,4- Trimethylbenzol, Cumol und Solvent Naptha, Toluol, Xylol; (organische) Ester, wie Methylacetat, Ethylacetat, Butylacetat, Methoxypropylacetat, Ethyl-3-ethoxypropionat. Bevorzugt sind Mesitylen, 1,2,4-Trimethylbenzol, Cumol und Solvent Naptha, Toluol, Xylol, Essigsäuremethylester, Essigsäureethylester, Methoxypropylacetat. Ethyl-3-ethoxypropionat. Ganz besonders bevorzugt sind: Mesitylen (1,3,5-Trimethylbenzol), 1,2,4-Trimethylbenzol, Cumol (2-Phenylpropan), Solvent Naptha und Ethyl-3-ethoxypropionat.

Ein geeignetes Lösungsmittelgemisch umfasst beispielsweise L1) 0 bis 10 Gew.-%, vorzugsweise 1 bis 5 Gew.-%, insbesondere 2 bis 3 Gew.-%, Mesitylen, L2) 10 bis 50 Gew.-%, vorzugsweise 25 bis 50 Gew.-%, insbesondere 30 bis 40 Gew.-%, 1-Methoxy-2-propanolacetat, L3) 0 bis 20 Gew.-%, vorzugsweise 1 bis 20 Gew.-%, insbesondere 7 bis 15 Gew.-%, 1,2,4-Trimethylbenzol, L4) 10 bis 50 Gew.-%, vorzugsweise 25 bis 50 Gew.-%, insbesondere 30 bis 40 Gew.-%, Ethyl-3-ethoxypropionat, L5) 0 bis 10 Gew.-%, vorzugsweise 0,01 bis 2 Gew.-%, insbesondere 0,05 bis 0,5 Gew.-%, Cumol, und L6) 0 bis 80 Gew.-%, vorzugsweise 1 bis 40 Gew.-%, insbesondere 15 bis 25 Gew.-%, Solvent Naphtha, wobei die Summe der Komponenten L1 bis L6 stets 100 Gew.-% ergibt.

Typischerweise weisen die erste Polycarbonatschicht und die zweite Polycarbonatschicht eine Glastemperatur T_{g} von mehr als 145 °C insbesondere mehr als 147 °C, auf.

Das Polycarbonatderivat weist typischerweise ein mittleres Molekulargewicht (Gewichtsmittel) von mindestens 10.000, vorzugsweise von 20.000 bis 300.000.

Die Zubereitung kann im Detail enthalten: A) 0,1 bis 10 Gew.-%, insbesondere 0,5 bis 5 Gew.-%, eines Bindemittels mit einem Polycarbonatderivat auf Basis eines geminal disubstituierten Dihydroxydiphenylcycloalkans, B) 40 bis 99,9 Gew.-%, insbesondere 45 bis 99,5 Gew.-%, eines organischen Lösungsmittels oder Lösungsmittelgemischs, C) 0,1 bis 6 Gew.-%, insbesondere 0,5 bis 4 Ges.-%, eines Farbmittels oder Farbmittelgemischs, D) 0,001 bis 6 Gew.-%, insbesondere 0,1 bis 4 Gew.-%, eines funktionales Materials oder einer Mischung funktionaler Materialien, E) 0,1 bis 30 Gew.-%, insbesondere 1 bis 20 Gew.-%, Additive und/oder Hilfsstoffe, oder einer Mischung solcher Stoffe.

Als Komponente C, sofern ein Farbmittel vorgesehen sein soll, kommt grundsätzlich jedes beliebige Farbmittel oder Farbmittelgemisch in Frage. Unter Farbmittel sind alle farbgebenden Stoffe bezeichnet. Das bedeutet, es kann sich sowohl um Farbstoffe (einen Überblick über Farbstoffe gibt *Ullmann's Encyclopedia of Industrial Chemistry,* Electronic Release 2007, Wiley Verlag, Kapitel "Dyes, General Survey", wie auch Pigmente (einen Überblick über organische wie anorganische Pigmente gibt *Ullmann's Encyclopedia of Industrial Chemistry,* Electronic Release 2007, Wiley Verlag, Kapitel "Pigments, Organic" bzw. "Pigments, Inorganic") handeln. Farbstoffe sollten in den Lösungsmitteln der Komponente B löslich bzw. (stabil) dispergierbar oder suspendierbar sein. Des Weiteren ist es vorteilhaft, wenn das Farbmittel bei Temperaturen von 160 °C und mehr für einen Zeitraum von mehr als 5 min. stabil, insbesondere farbstabil ist. Es ist auch möglich, dass das Farbmittel einer vorgegebenen und reproduzierbaren Farbveränderung unter den Verarbeitungsbedingungen unterworfen ist und entsprechend ausgewählt wird. Pigmente müssen neben der Temperaturstabilität insbesondere in feinster Partikelgrößenverteilung vorliegen. In der Praxis des Tintenstrahldrucks bedeutet dies, dass die Teilchengröße nicht über 1,0 µm hinausgehen sollte, da sonst Verstopfungen im Druckkopf die Folge sind. In der Regel haben sich nanoskalige Festkörperpigmente bewährt.

Die Farbmittel können kationisch, anionisch oder auch neutral sein. Lediglich als Beispiele für im Tintenstrahldruck verwendbare Farbmittel seinen genannt: Brillantschwarz C.I. Nr. 28440, Chromogenschwarz C.I. Nr. 14645, Direkttiefschwarz E C.I. Nr. 30235, Echtschwarzsalz B C.I. Nr. 37245, Echtschwarzsalz K C.I. Nr. 37190, Sudanschwarz HB C.I. 26150, Naphtolschwarz C.I. Nr. 20470, Bayscript^{®} Schwarz flüssig, C.I. Basic Black 11, C.I. Basic Blue 154, Cartasol^{®} Türkis K-ZL flüssig, Cartasol^{®} Türkis K-RL flüssig (C.I. Basic Blue 140), Cartasol Blau K5R flüssig. Geeignet sind des Weiteren z. B. die im Handel erhältlichen Farbstoffe Hostafine^{®} Schwarz TS flüssig (vertrieben von Clariant GmbH Deutschland), Bayscript^{®} Schwarz flüssig (C.I.-Gemisch, vertrieben von Bayer AG Deutschland), Cartasol^{®} Schwarz MG flüssig (C.I. Basic Black 11, Eingetragenes Markenzeichen der Clariant GmbH Deutschland), Flexonylschwarz^{®} PR 100 (E C.I. Nr. 30235, vertrieben von Hoechst AG), Rhodamin B, Cartasol^{®} Orange K3 GL, Cartasol^{®} Gelb K4 GL, Cartasol^{®} K GL, oder Cartasol^{®} Rot K-3B. Des weiteren können als lösliche Farbmittel Anthrachinon-, Azo-, Chinophthalon-, Cumarin-, Methin-, Perinon-, und/oder Pyrazolfarbstoffe, z.B. unter dem Markennamen Macrolex® erhältlich, Verwendung finden. Weitere geeignete Farbmittel sind in der Literaturstelle Ullmann's Encyclopedia of Industrial Chemistry, Electronic Release 2007, Wiley Verlag, Kapitel "Colorants Used in Ink Jet Inks" beschrieben. Gut lösliche Farbmittel führen zu einer optimalen Integration in die Matrix bzw. den Binder der Druckschicht. Die Farbmittel können entweder direkt als Farbstoff bzw. Pigment zugesetzt werden oder als Paste, einem Gemisch aus Farbstoff und Pigment zusammen mit einem weiteren Binder. Dieser zusätzliche Binder kann sich vom erfindungsgemäßen Binder unterscheiden (z.B. ein Polyester sein), sollte aber chemisch kompatibel mit den weiteren Komponenten der erfindungsgemäß eingesetzten Zubereitung sein. Sofern eine solche Paste als Farbmittel eingesetzt wird, bezieht sich die Mengenangabe der Komponente B auf das Farbmittel ohne die sonstigen Komponenten der Paste. Diese sonstigen Komponenten der Paste sind dann unter die Komponente E zu subsumieren. Bei Verwendung von sogenannten Buntpigmenten in den Skalenfarben Cyan-Magenta-Yellow und bevorzugt auch (Ruß)-Schwarz sind Volltonfarbabbildungen möglich.

Die Komponente D umfasst Substanzen, die unter Einsatz von technischen Hilfsmitteln unmittelbar durch das menschliche Auge oder durch Verwendung von geeigneten Detektoren ersichtlich sind. Hier sind die dem Fachmann einschlägig bekannten Materialien (vgl. auch van Renesse, Optical document security, 3rd Ed., Artech House, 2005) gemeint, die zu Absicherung von Wert und Sicherheitsdokumenten eingesetzt werden. Dazu zählen Lumineszenzstoffe (Farbstoffe oder Pigmente, organisch oder anorganisch) wie z.B. Photoluminophore, Elektroluminophore, Antistokes Luminophore, Fluorophore aber auch magnetisierbare, photoakustisch adressierbare oder piezoelektrische Materialien. Des Weiteren können Raman-aktive oder Ramanverstärkende Materialien eingesetzt werden, ebenso wie sogenannte Barcode-Materialien. Auch hier gelten als bevorzugte Kriterien entweder die Löslichkeit in der Komponente B oder bei pigmentierten Systemen Teilchengrößen < 1 µm sowie Temperaturstabilität für Temperaturen > 160 °C im Sinne der Ausführungen zur Komponente C. Funktionale Materialien können direkt zugegeben werden oder über eine Paste, i.e. Gemisch mit einem weiteren Binder, welcher dann Bestandteil der Komponente E bildet, oder dem erfindungsgemäß eingesetzten Binder der Komponente A.

Die Komponente E umfasst bei Tinten für den Tintenstrahldruck üblicherweise eingerichtete Stoffe wie Antischaummittel, Stellmittel, Netzmittel, Tenside, Fließmittel, Trockner, Katalysatoren, (Licht-) Stabilisatoren, Konservierungsmittel, Biozide, Tenside, organische Polymere zur Viskositätseinstellung, Puffersysteme, etc. Als Stellmittel kommen fachübliche Stellsalze in Frage. Ein Beispiel hierfür ist Natriumlactat. Als Biozide kommen alle handelsüblichen Konservierungsmittel, welche für Tinten verwendet werden, in Frage. Beispiele hierfür sind Proxel^{®}GXL und Parmetol^{®} A26. Als Tenside kommen alle handelsüblichen Tenside, welche für Tinten verwendet werden, in Frage. Bevorzugt sind amphotere oder nichtionische Tenside. Selbstverständlich ist aber auch der Einsatz spezieller anionischer oder kationischer Tenside, welche die Eigenschaften des Farbstoffs nicht verändern, möglich. Beispiele für geeignete Tenside sind Betaine, ethoxilierte Diole usw.. Beispiele sind die Produktreihen Surfynol^{®} und Tergitol^{®}. Die Menge an Tensiden wird beispielsweise mit der Maßgabe gewählt, dass die Oberflächenspannung der Tinte im Bereich von 10 bis 60 mN/m, vorzugsweise 25 bis 45 mN/m, gemessen bei 25 °C, liegt. Es kann ein Puffersystem eingerichtet sein, welches den pH-Wert im Bereich von 2,5 bis 8,5, insbesondere im Bereich von 5 bis 8, stabilisiert. Geeignete Puffersysteme sind Lithiumacetat, Boratpuffer, Triethanolamin oder Essigsäure/Natriumacetat. Ein Puffersystem wird insbesondere im Falle einer im Wesentlichen wässrigen Komponente B in Frage kommen. Zur Einstellung der Viskosität der Tinte können (ggf. wasserlösliche) Polymere vorgesehen sein. Hier kommen alle für übliche Tintenformulierungen geeignete Polymere in Frage. Beispiele sind wasserlösliche Stärke, insbesondere mit einem mittleren Molekulargewicht von 3.000 bis 7.000, Polyvinylpyrolidon, insbesondere mit einem mittleren Molekulargewicht von 25.000 bis 250.000, Polyvinylalkohol, insbesondere mit einem mittleren Molekulargewicht von 10.000 bis 20.000, Xanthan-Gummi, Carboxy-Methylcellulose, Ethylenoxid/Propylenoxid-Blockcopolymer, insbesondere mit einem mittleren Molekulargewicht von 1.000 bis 8.000. Ein Beispiel für das letztgenannte Blockcopolymer ist die Produktreihe Pluronic^{®}. Der Anteil an Biozid, bezogen auf die Gesamtmenge an Tinte, kann im Bereich von 0 bis 0,5 Gew-%, vorzugsweise 0,1 bis 0,3 Gew.-%, liegen. Der Anteil an Tensid, bezogen auf die Gesamtmenge an Tinte, kann im Bereich von 0 bis 0,2 Gew.-% liegen. Der Anteil an Stellmitteln kann, bezogen auf die Gesamtmenge an Tinte, 0 bis 1 Ges.-%, vorzugsweise 0,1 bis 0,5 Gew.-%, betragen.

Zu den Hilfsmitteln werden auch sonstige Komponenten gezählt, wie beispielsweise Essigsäure, Ameisensäure oder n-Methyl-Pyrolidon oder sonstige Polymere aus der eingesetzten Farbstofflösuhg oder -Paste.

Bezüglich Substanzen, welche als Komponente E geeignet sind, wird ergänzend beispielsweise auf Ullmann's Encyclopedia of Chemical Industry, Electronic Release 2007, Wiley Verlag, Kapitel "Paints and Coatings", Sektion "Paint Additives", verwiesen.

Die Erfindung betrifft des Weiteren ein Verfahren zur Herstellung eines Verbundes mit zumindest einer ersten Polymerschicht sowie, optional, einer zweiten Polymerschicht, jeweils aus einem Polycarbonat Polymer auf Basis Bisphenol A, wobei auf der ersten Polymerschicht eine Tintenstahldruckschicht angeordnet ist, mit den folgenden Verfahrensstufen: a) auf zumindest einen Teilbereich der ersten Polymerschicht wird die Tintenstrahldruckschicht aus einer erfindungsgemäß eingesetzten Zubereitung aufgebracht, b) optional wird die Tintenstrahldruckschicht getrocknet, c) optional anschließend an Stufe a) oder Stufe b) wird die zweite Polymerschicht auf die erste Polymerschicht, die Tintenstrahldruckschicht abdeckend, aufgelegt und die erste Polymerschicht und die zweite Polymerschicht werden unter Druck, bei einer Temperatur von 120 °C bis 230 °C und für eine definierte Zeitspanne miteinander laminiert.

Mit anderen Worten ausgedrückt, ein erfindungsgemäßer Verbund kann allein aus einer Polymerschicht und einer mittels der erfindungsgemäß verwendeten Zubereitung aufgebrachten Druckschicht bestehen, aber auch eine weitere Polymerschicht, ggf. im weiteren Verbund mit zusätzlichen Schichten, umfassen. So ist es beispielsweise möglich, dass die Druckschicht als oberste Schicht innerhalb eines Verbundes (ggf. mit weiteren Schichten) eingerichtet ist. Auch kann die Druckschicht direkt und ohne weitere Abdeckung auf einer als Overlay-Folie ausgebildete Polymerschicht aufgedruckt sein.

Die Tintenstrahldruckschicht kann vollflächig auf der ersten Polymerschicht eingerichtet werden. Meist wird jedoch die Tintenstrahldruckschicht nur in einem Teilbereich der Oberfläche der ersten Polymerschicht eingerichtet sein.

Der spezifische Druck (Druck direkt am Werkstück) in Stufe d) liegt typischerweise im Bereich von 1 bar bis 10 bar, insbesondere im Bereich von 3 bar bis 7 bar. Die Temperatur in Stufe d) liegt vorzugsweise im Bereich 140 °C bis 200 °C, insbesondere im Bereich von 150 °C bis 180 °C. Die Dauer der Stufe d) kann im Bereich von 0,5 s bis 120 s, insbesondere 5 s bis 60 s, liegen.

In Stufe b) kann bei einer Temperatur im Bereich 20 °C bis 120 °C, insbesondere 20 °C bis 80 °C, vorzugsweise 20 °C bis 60 °C, für eine Dauer von zumindest 1 s., vorzugsweise 5 s. bis 6000 s., getrocknet werden.

Die erste Polycarbonatschicht und die zweite Polycarbonatschicht können, unabhängig voneinander, eine Glastemperatur T_{g} von mehr als 145 °C aufweisen.

Die Dicke der ersten Polycarbonatschicht und der zweiten Polycarbonatschicht kann, gleich oder verschieden, im Bereich von 10 bis 1000 µm, insbesondere von 20 bis 200 µm, liegen.

Die Dicke, gemessen in Richtungen orthogonal zu einer Hauptfläche einer Polycarbonatschicht, der Tintenstrahldruckschicht kann, vor oder nach dem Trocknen, im Bereich 0,01 bis 10 µm, insbesondere 0,05 bis 5 µm, vorzugsweise 0,02 bis 1 µm, liegen.

Gegenstand der Erfindung ist auch ein Verbund erhältlich mit einem erfindungsgemäßen Verfahren. Ein solcher Verbund enthält typischerweise zumindest eine erste Polycarbonatschicht und eine zweite Polycarbonatschicht sowie eine zwischen der ersten Polycarbonatschicht und der zweiten Polycarbonatschicht angeordnete Tintenstrahldruckschicht aus einer erfindungsgemäß eingesetzten Zubereitung.

Ein erfindungsgemäßes Verfahren zur Herstellung eines Verbundes kann zur Herstellung eines Sicherheits- und/oder Wertdokuments eingesetzt werden, wobei optional gleichzeitig mit, vor oder nach der Herstellung des Verbundes die erste Polycarbonatschicht und/oder die zweite Polycarbonatschicht mit zumindest einer weiteren Schicht, beispielsweise einer Tragschicht, direkt oder indirekt gestapelt verbunden wird.

Als Sicherheits- und/oder Wertdokument seien beispielhaft genannt: Personalausweise, Reisepässe, ID-Karten, Zugangskontrollausweise, Visa, Steuerzeichen, Tickets, Führerscheine, Kraftfahrzeugpapiere, Banknoten, Schecks, Postwertzeichen, Kreditkarten, beliebige Chipkarten und Haftetiketten (z.B. zur Produktsicherung). Solche Sicherheits- und/oder Wertdokumente weisen typischerweise zumindest ein Substrat, eine Druckschicht und optional eine transparente Deckschicht auf. Substrat und Deckschicht können ihrerseits aus einer Mehrzahl von Schichten bestehen. Ein Substrat ist eine Trägerstruktur, auf welche die Druckschicht mit Informationen, Bildern, Mustern und dergleichen aufgebracht wird. Als Materialien für ein Substrat kommen alle fachüblichen Werkstoffe auf Papier- und/oder (organischer) Polymerbasis in Frage. Ein solches Sicherheits- und/oder Wertdokument umfasst innerhalb des Gesamt-Schichtverbundes einen erfindungsgemäßen Verbund. Neben dem erfindungsgemäßen Verbund kann noch zumindest eine (zusätzliche) Druckschicht eingerichtet sein, welche auf einer äußeren Fläche des Verbundes oder auf einer mit dem Verbund verbundenen weiteren Schicht angebracht sein kann.

Schließlich betrifft die Erfindung ein dergestalt herstellbares Sicherheits- und/oder Wertdokument bzw. enthaltend einen erfindungsgemäßen Verbund.

Die Erfindung läßt sich aber auch in anderen technologischen Bereichen einsetzen. So können abriebfeste Dekorationen von Spritzgußteilen durch Folienhinterspritzung erzeugt werden. Nach dem Stand der Technik werden dabei PC-Folien im Siebdruck bedruckt, plastisch verformt (z.B. Tiefziehen), in ein Spritzgußwerkzeug eingelegt und mit einem thermoplastischen Kunststoff hinterspritzt. Auf diese Weise werden z.B. Handyverschalungen oder dekorative Gehäuse hergestellt. Mehrfarbige Dekorationen machen die Herstellung von mehreren Druckformen / Drucksieben notwendig und sind daher nur für entsprechende Stückzahlen rentabel. Mit einer erfindungsgemäß eingesetzten Tinte sind jedoch auch Einzelfertigungen bzw. Unikatmotive möglich und so könnten z.B. individualisierte, hochabriebfeste Handyschalen (zum Beispiel mit Foto) oder personalisierte Tachoscheiben (z.B. Initialen des Besitzers) produziert werden.

Daher betrifft die Erfindung auch ein Verfahren zur Herstellung eines Verbundes mit zumindest einer Polymerschicht sowie einem Spritzgussformteil aus einem Polymerwerkstoff, wobei zwischen der Polymerschicht und dem Spritzgussformteil eine Tintenstahldruckschicht angeordnet ist, mit den folgenden Verfahrensstufen: a) auf zumindest einen Teilbereich der Polymerschicht wird die Tintenstrahldruckschicht aus einer erfindungsgemäß verwendeten Zubereitung aufgebracht, b) optional wird die Tintenstrahldruckschicht getrocknet, c) anschließend an Stufe a) oder Stufe b) wird die Polymerschicht in ein Spritzgusswerkzeug eingelegt (erforderlichenfalls nach plastischer Verformung der bedruckten Polymerschicht zur Anpassung an die Wandungen des Spritzgusswerkzeuges), die Tintenstrahldruckschicht nach innen weisend, d) in das Spritzgusswerkzeug wird der Polymerwerkstoff bei einer Temperatur von zumindest 60 °C eingespritzt, und e) der Verbund wird nach dem Abkühlen auf eine Temperatur von zumindest 20 °C unter die Temperatur der Stufe d) dem Spritzgusswerkzeug entnommen.

Die Polymerschicht kann vorzugsweise eine Polycarbonatschicht auf Basis Bisphenol A sein. Als Polymerwerkstoffe kommen grundsätzlich alle im Bereich des Kunststoffspritzgusses üblichen thermoplastischen Polymere in Frage.

Die Temperatur in Stufe d) kann im Bereich von 80 °C bis 200 °C, insbesondere im Bereich von 100 °C bis 180 °C, liegen. Die Temperatur in Stufe e) kann zumindest 40 °C unter der Temperatur in Stufe d) liegen.

Grundsätzlich gelten ansonsten alle im Zusammenhang mit einem Verbund für ein Sicherheits- und/oder Wertdokument angebrachten Ausführungen analog.

Daher umfasst die Erfindung auch einen Verbund enthaltend zumindest eine Polycarbonatschicht und ein Spritzgussformteil sowie eine zwischen der Polycarbonatschicht und dem Spritzgussformteil angeordnete Tintenstrahldruckschicht aus einer erfindungsgemäß eingesetzten Zubereitung.

Im Folgenden wird die Erfindung anhand von nicht limitierenden Ausführungsbeispielen näher erläutert. Es zeigen:
- Figur 1:: eine Darstellung einer Testdruckfläche, und
- Figur 2:: Details eines mit einem erfindungsgemäßen Verfahren hergestellten Portraits einer Person.

### Beispiel 1: Herstellung von erfindungsgemäß einsetzbaren Polycarbonatderivaten

### Beispiel 1.1: Herstellung eines ersten Polycarbonatderivats

205,7 g (0,90 Mol) Bisphenol A (2,2-Bis-(4-hydroxyphenyl)-propan, 30,7 g (0, 10 Mol) 1,1-Bis-(4-hydroxyphenyl)-3,3,5-trimethylcyclohexan, 336,6 g (6 Mol) KOH und 2700 g Wasser werden in einer Inertgas-Atmosphäre unter Rühren gelöst. Dann fügt man eine Lösung von 1,88 g Phenol in 2500 ml Methylenchlorid zu. In die gut gerührte Lösung wurden bei pH 13 bis 14 und 21 bis 25°C 198 g (2 Mol) Phosgen eingeleitet. Danach wird 1 ml Ethylpiperidin zugegeben und noch 45 Min. gerührt. Die bisphenolatfreie wässrige Phase wird abgetrennt, die organische Phase nach Ansäuern mit Phosphorsäure mit Wasser neutral gewaschen und vom Lösungsmittel befreit.

Das Polycarbonatderivat zeigte eine relative Lösungsviskosität von 1,255. Die Glastemperatur wurde zu 157°C bestimmt (DSC).

### Beispiel 1.2: Herstellung eines zweiten Polycarbonatderivats

Analog dem Beispiel 1 wurde eine Mischung aus 181,4 g (0, 79 Mol) Bisphenol A und 63,7 g (0,21 Mol) 1,1-Bis-(4-hydroxyphenyl)-3,3,5-trimethylcyclohexan zum Polycarbonatderivat umgesetzt.

Das Polycarbonatderivat zeigte eine relative Lösungsviskosität von 1,263. Die Glastemperatur wurde zu 167°C bestimmt (DSC).

### Beispiel 1.3: Herstellung eines dritten Polycarbonatderivats

Analog dem Beispiel 1 wurde eine Mischung von 149,0 g (0,65 Mol) Bisphenol A (2,2-Bis-(4-hydroxy.phenyl)-propan und 107,9 g (0,35 Mol) 1,1-Bis- (4-hydroxyphenyl)-3,3,5-trimethylcyclohexan zum Polycarbonatderivat umgesetzt.

Das Polycarbonatderivat zeigte eine relative Lösungsviskosität von 1,263. Die Glastemperatur wurde zu 183 °C bestimmt (DSC) .

### Beispiel 1.4: Herstellung eines vierten Polycarbonatderivats

Analog dem Beispiel 1 wurde eine Mischung aus 91,6 g (0,40 Mol) Bisphenol A und 185,9 g (0,60 Mol) 1,1-Bis-(4-hydroxyphenyl)-3,3,5-trimethylcyclohexan zum Polycarbonatderivat umgesetzt.

Das Polycarbonatderivat zeigte eine relative Lösungsviskosität von 1,251. Die Glastemperatur wurde zu 204 °C bestimmt (DSC).

### Beispiel 1.5: Herstellung eines fünften Polycarbonatderivats

Wie in Beispiel 1 wurde eine Mischung aus 44,2 g (0,19 Mol) Bisphenol A und 250,4 g (0,81 Mol) 1,1-Bis-(4-hydroxyphenyl)-3,3,5-trimethylcyclohexan zum Polycarbonat umgesetzt.

Das Polycarbonatderivat zeigte eine relative Lösungsviskosität von 1,248. Die Glastemperatur wurde zu 216 °C bestimmt (DSC).

### Beispiel 2: Herstellung einer für die Herstellung einer Tintenstrahldruckfarbe geeigneten flüssigen Zubereitung

Eine flüssige Zubereitung wurde aus 17,5 Gew.-Teile des Polycarbonatderivats aus Beispiel 1.3 und 82,5 Gew.-Teile eines Lsgm.-Gemisches gemäß Tabelle I hergestellt.

**Tabelle I**

| | |
|---|---|
| Mesitylen | 2,4 |
| 1-Methoxy-2-propanolacetat | 34,95 |
| 1,2,4-Trimethylbenzol | 10,75 |
| Ethyl-3-ethoxypropionat | 33,35 |
| Cumol | 0, 105 |
| Solvent Naphtha | 18,45 |

Es wurde eine farblose, hochviskose Lösung mit einer Lösungsviskosität bei Raumtemperatur von 800m Pas erhalten.

### Beispiel 3: Herstellung einer ersten erfindungsgemäß eingesetzten Tintenstrahldruckfarbe

In einem 50 mL Weithalsgewindeglas wurden 4 g Polycarbonatlösung aus Beispiel 2 und 30 g des Lösungsmittelgemisches aus Beispiel 2 mit einem Magnetrührer homogenisiert. Es wurde eine farblose, niederviskose Lösung mit einer Lösungsviskosität bei Raumtemperatur von 1,67 mPa·s erhalten.

Die Oberflächenspannung dieser Basistinte wurde mit einem OEG Surftens Meßsystem nach der pendant drop Methode mit 21,4 ± 1,9 mN/m bestimmt.

Eine Zugabe eines Pigmentes oder eines Farbstoffes erfolgte nicht, da diese Tinte lediglich zur Verwendung in dem Testdruck des Beispiels 6 diente.

### Beispiel 4: Herstellung einer zweiten erfindungsgemäß eingesetzten Tintenstrahldruckfarbe

Analog zu Beispiel 3 wurden 10 g Polycarbonat lösung aus Beispiel 2 und 32,5 g Lösungsmittelgemisch aus Beispiel 2 mit einem Magnetrührer homogenisiert (4 %-ige PC-Lösung). Es wurde eine farblose, niederviskose Lösung mit einer Lösungsviskosität bei 20 °C von 5,02 mPa.s erhalten. Auch hier erfolgte keine Zugabe eines Pigments oder Farbstoffes, da diese Tinte zur Verwendung in dem Testdruck des Beispiels 7 diente.

### Beispiel 5: Herstellung einer dritten erfindungsgemäß eingesetzten Tintenstrahldruckfarbe

Es wurde eine Polycarbonat-Lösung gemäß Beispiel 4 hergestellt und zusätzlich mit ca. 2% Pigment Black 28 versetzt. Es ergibt sich eine Tinte, mittels welcher schwarz/weiss Bilder auf Polycarbonatfolien gedruckt werden können, wozu ergänzend auf das Beispiel 8 verwiesen wird.

### Beispiel 6: Tropfengröße beim Druck einer Tinte nach Beispiel 3

Die Lösung aus Beispiel 3 wurde über Filtration in eine Drucker-Kartusche überführt und mit einem Ink-Jet-Drucker FUJIFILM-Dimatix DMP 2800 unter Variation diverser Druckparameter verdruckt. Bei dem verwendeten Drucker handelt es sich um einen sogenanntes Drop-On-Demand System, bei welchem die Tropfenerzeugung über einen piezoelektrischen Druckkopf erfolgt. Der DMP 2800 verfügt über eine stroboskopische Bildaufnahme, mit der sich die Tropfen-Bildung und der Tropfen-Flug untersuchen lassen. Die Drucke wurden bei 100 °C für 30 min getrocknet. Je nach Untergrund lassen sich unterschiedliche Tropfengrößen erzielen, wie Tabelle 1 zeigt.

**Tabelle 1**

| Substrat | Glas | Polycarbonat (glatt) | Velin-Papier |
|---|---|---|---|
| Ø Einzeltropfen | ∼ 74 µm | ∼ 85 µm | ∼ 100 µm |

Auf saugenden Untergründen verlaufen die Tropfen erwartungsgemäß mehr als auf nicht saugenden Untergründen wie Glas oder Kunststoff.

### Beispiel 7: Bestimmung der Schichtdicke einer Tintenstrahldruckschicht

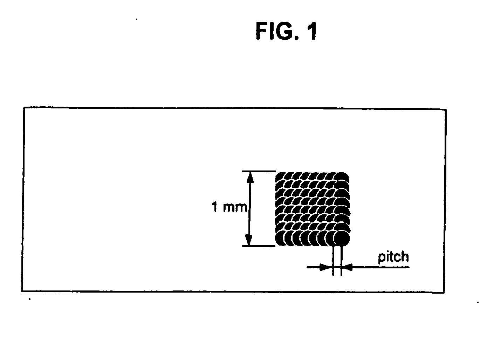

Eine Tinte gemäß Beispiel 4 wurde auf Glassubstrate gedruckt. Dabei variierte der sogenannte Tropfenabstand (pitch, siehe auch Figur 1) von 10 - 45 µm. Die Drucke wurden wiederum bei 100 °C für 30 min getrocknet. Anschließend erfolgten Schichtdickenmessungen (Arithmetic Step Height = ASH) mit einem Profilometer (Dektak 6M; 12,5 µm Stylus), deren Ergebnisse in Tabelle 2 zusammengefasst sind.

**Tabelle 2**

| Pitch | ASH [nm] |
|---|---|
| 10 µm | 685 |
| 30 µm | 100 |
| 45 µm | 27 |

Allein durch den Tropfenabstand lässt sich die Schichtdicke in einem weiten Bereich einstellen.

### Beispiel 8: Herstellung eines Bildes und Prüfung der optischen Qualität nach dem Laminieren

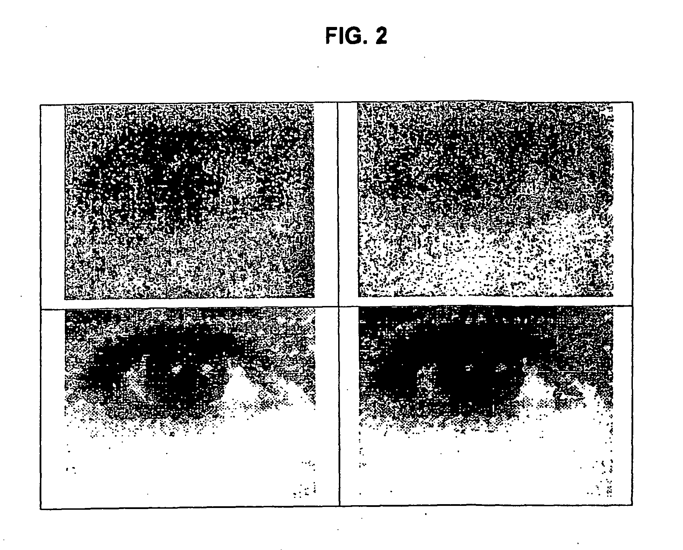

Mit der Tinte aus Beispiel 5 wurde ein Porträt einer Person auf Makrofol® 4-4 gedruckt. Das so hergestellte Porträt wurde zusammen mit transparenten Makrofol® 6-2-Folien bei Temperaturen > 180 °C, Drücken > 5 bar und Zeiten > 10 min zu einem Verbund von ca. 800 µm Dicke laminiert. Hierbei wurden lichtmikroskopische Untersuchungen vor und nach der Laminierung durchgeführt, um Aussagen zur Randschärfe einzelner Pixel treffen zu können. Die Ergebnisse sind in der Figur 2 dargestellt. Gezeigt werden oben in Figur 2 farbige Druckbilder (oben) sowie darunter die gleichen Druckbilder, jedoch nach Konversion in schwarz/weiss. Links sieht man die Detailaufnahme der erfindungsgemäß hergestellten Tintenstrahldruckschicht vor dem Laminieren. Rechts ist die gleiche Detailaufnahme nach dem Laminieren wiedergegeben. Man erkennt, dass das Pixelmuster auch nach der Lamination in nahezu der gleichen Auflösung erhalten bleibt. Die horizontalen Linien ergeben sich aus den Überlappungsbereichen der einzelnen Ink-jet Düsen des Druckkopfes und haben daher nichts mit der erfindungsgemäßen Tinte zu tun.

Eine optische Untersuchung des Verbundes ergab ansonsten keinerlei erkennbare Phasengrenze. Der Verbund zeigte sich als monolithischer Block, der auch Delamination hervorragend widersteht.

## Patentansprüche

1. Verwendung einer Zubereitung enthaltend
A) 0,1 bis 20 Gew.-% eines Bindemittels mit einem Polycarbonatderivat auf Basis eines geminal disubstituierten Dihydroxydiphenylcycloalkans,
B) 30 bis 99,9 Gew.-% eines Lösungsmittels oder Lösungsmittelgemischs,
C) 0 bis 10 Gew.-%, bezogen auf Trockenmasse, eines Farbmittels oder Farbmittelgemischs,
D) 0 bis 10 Gew.-% eines funktionales Materials oder einer Mischung funktionaler Materialien,
E) 0 bis 30 Gew.-% Additive und/oder Hilfsstoffe, oder einer Mischung solcher Stoffe,
wobei die Summe der Komponenten A) bis E) stets 100 Gew.-% ergibt,
als Tintenstrahldruckfarbe.

2. Verwendung nach einem der Anspruch 1, wobei das Polycarbonatderivat funktionelle Carbonatstruktureinheiten der Formel (I) enthält, 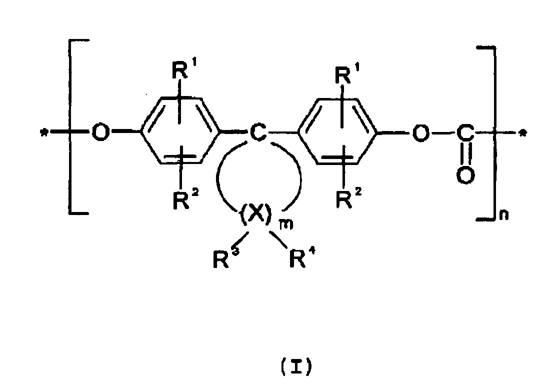 worin
R¹ und R² unabhängig voneinander Wasserstoff, Halogen, bevorzugt Chlor oder Brom, C₁-C₈-Alkyl, C₅-C₆-Cycloalkyl, C₆-C₁₀-Aryl, bevorzugt Phenol, und C₇-C₁₂-Aralkyl, bevorzugt Phenyl-C₁-C₄-Alkyl, insbesondere Benzyl,
m eine ganze Zahl von 4 bis 7, bevorzugt 4 oder 5,
R³ und R⁴ für jedes X individuell wählbar, unabhängig voneinander Wasserstoff oder C₁-C₆-Alkyl
x Kohlenstoff und
n eine ganze Zahl größer 20 bedeuten,
mit der Maßgabe, dass an mindestens einem Atom X, R³ und R⁴ gleichzeitig Alkyl bedeuten.

3. Verwendung nach Anspruch 2, wobei an 1 bis 2 Atomen X, insbesondere nur an einem Atom X, R³ und R⁴ gleichzeitig Alkyl sind oder
wobei R³ und R⁴ Methyl sind.

4. Verwendung nach einem der Ansprüche 2 bis 3, wobei die X-Atome in alpha-Stellung zu dem Diphenyl-substituierten C-Atom (C1) nicht dialkylsubstituiert sind.

5. Verwendung nach einem der Ansprüche 2 bis 4, wobei die X-Atome in beta-Stellung zu C1 mit Alkyl disubstituiert sind.

6. Verwendung nach einem der Ansprüche 2 bis 5, wobei das Polycarbonatderivat auf Basis
4,4'-(3,3,5-trimethylcyclohexan-1,1-diyl)diphenol,
4,4'-(3,3-dimethylcyclohexan-1,1-diyl)diphenol, oder
4,4'-(2,4,4-trimethylcyclopentan-1,1-diyl)diphenol
ist.

7. Verwendung nach einem der Ansprüche 1 bis 6, wobei das Polycarbonatderivat ein Copolymer enthaltend, insbesondere bestehend aus, Monomereinheiten M1 auf Basis der Formel (Ib), beispielsweise auf Basis Bisphenol A, sowie Monomereinheiten M2 auf Basis des geminal disubstituierten Dihydroxydiphenylcycloalkans, vorzugsweise des 4,4'-(3,3,5-trimethylcyclohexan-1,1-diyl)diphenols, ist, wobei das Molverhältnis M2/M1 vorzugsweise größer als 0,3, insbesondere größer als 0,40, vorzugsweise größer als 0,50 ist.

8. Verwendung nach einem der Ansprüche 1 bis 7, wobei die Komponente B) aus einem flüssigen aliphatischen, cycloaliphatischen, und/oder aromatischen Kohlenwasserstoff, einem flüssigem organischen Ester, und/oder einer Mischung solcher Substanzen besteht.

9. Verwendung nach Anspruch 8, wobei die Komponente B) besteht aus:
L1) 0 bis 10 Gew.-%, vorzugsweise 1 bis 5 Gew.-%, insbesondere 2 bis 3 Gew.-%, Mesitylen,
L2) 10 bis 50 Gew.-%, vorzugsweise 25 bis 50 Gew.-%, insbesondere 30 bis 40 Gew.-%, 1-Methoxy-2-propanolacetat,
L3) 0 bis 20 Gew.-%, vorzugsweise 1 bis 20 Gew.-%, insbesondere 7 bis 15 Gew.-%, 1,2,4-Trimethylbenzol,
L4) 10 bis 50 Gew.-%, vorzugsweise 25 bis 50 Gew.-%, insbesondere 30 bis 40 Gew.-%, Ethyl-3-ethoxypropionat,
L5) 0 bis 10 Gew.-%, vorzugsweise 0,01 bis 2 Gew.-%, insbesondere 0,05 bis 0,5 Gew.-%, Cumol, und
L6) 0 bis 80 Gew.-%, vorzugsweise 1 bis 40 Gew.-%, insbesondere 15 bis 25 Gew.-%, Solvent Naphtha,
wobei die Summe der Komponenten L1 bis L6 stets 100% beträgt.

10. Verwendung nach einem der Ansprüche 1 bis 9, wobei die Zubereitung enthält:
A) 0,1 bis 10 Gew.-%, insbesondere 0,5 bis 5 Gew.-%, eines Bindemittels mit einem Polycarbonatderivat auf Basis eines geminal disubstituierten Dihydroxydiphenylcycloalkans,
B) 40 bis 99,9 Gew.-%, insbesondere 45 bis 99,5 Gew.-%, eines organischen Lösungsmittels oder Lösungsmittelgemischs,
C) 0,1 bis 6 Gew.-%, insbesondere 0,5 bis 4 Gew.-%, eines Farbmittels oder Farbmittelgemischs,
D) 0,001 bis 6 Gew.-%, insbesondere 0,1 bis 4 Gew.-%, eines funktionales Materials oder einer Mischung funktionaler Materialien,
E) 0,1 bis 30 Gew.-%, insbesondere 1 bis 20 Gew.-%, Additive und/oder Hilfsstoffe, oder einer Mischung solcher Stoffe.

11. Verfahren zur Herstellung eines Verbundes mit zumindest einer ersten Polymerschicht sowie, optional, einer zweiten Polymerschicht, jeweils aus einem Polycarbonat Polymer auf Basis Bisphenol A, wobei auf der ersten Polymerschicht eine Tintenstahldruckschicht angeordnet ist, mit den folgenden Verfahrensstufen:
a) auf zumindest einen Teilbereich der ersten Polymerschicht wird die Tintenstrahldruckschicht aus einer zubereitung nach einem der Ansprüche 1 bis 15 aufgebracht,
b) optional wird die Tintenstrahldruckschicht getrocknet,
c) optional anschließend an Stufe a) oder Stufe b) wird die zweite Polymerschicht auf die erste Polymerschicht, die Tintenstrahldruckschicht abdeckend, aufgelegt und die erste Polymerschicht und die zweite Polymerschicht werden unter Druck, bei einer Temperatur von 120 °C bis 230 °C und für eine definierte Zeitspanne miteinander laminiert.

12. Verwendung eines Verfahrens nach einem der Anspruch 11 zur Herstellung eines Sicherheits- und/oder Wertdokuments, wobei optional gleichzeitig mit, vor oder nach der Herstellung des Verbundes die erste Polycarbonatschicht und/oder die zweite Polycarbonatschicht mit zumindest einer weiteren Schicht, beispielsweise einer Tragschicht, direkt oder indirekt gestapelt verbunden wird.

13. Verfahren zur Herstellung eines Verbundes mit zumindest einer Polymerschicht sowie einem Spritzgussformteil aus einem Polymerwerkstoff, wobei zwischen der Polymerschicht und dem Spritzgussformteil eine Tintenstahldruckschicht angeordnet ist, mit den folgenden Verfahrensstufen:
a) auf zumindest einen Teilbereich der Polymerschicht wird die Tintenstrahldruckschicht aus einer Zubereitung nach einem der Ansprüche 1 bis 15 aufgebracht,
b) optional wird die Tintenstrahldruckschicht getrocknet,
c) anschließend an Stufe a) oder Stufe b) wird die Polymerschicht in ein Spritzgusswerkzeug eingelegt, die Tintenstrahldruckschicht nach innen weisend,
d) in das Spritzgusswerkzeug wird der Polymerwerkstoff bei einer Temperatur von zumindest 60 °C eingespritzt, und
e) der verbund wird nach dem Abkühlen auf eine Temperatur von zumindest 20 °C unter die Temperatur der Stufe d) dem Spritzgusswerkzeug entnommen

14. Verfahren nach Anspruch 13, wobei die Temperatur in Stufe d) im Bereich von 80 °C bis 200 °C, insbesondere im Bereich von 100 °C bis 180 °C, ist, und/oder wobei die Temperatur in Stufe e) zumindest 40 °C unter der Temperatur in Stufe d) liegt.

15. Verfahren nach einem der Ansprüche 13 bis 14, wobei die Dicke der Polycarbonatschicht im Bereich von 10 bis 1000 µm, insbesondere von 20 bis 200 µm, liegt
oder
wobei die Dicke, gemessen in Richtungen orthogonal zu einer Hauptfläche der Polycarbonatschicht, der Tintenstrahldruckschicht im Bereich 0,01 bis 10 µm, insbesondere 0,05 bis 5 µm, liegt.

## Claims

1. The use of a preparation containing
A) 0.1 to 20 percent by weight of a binder comprising a polycarbonate derivative based on a geminally disubstituted dihydroxy diphenyl cycloalkane,
B) 30 to 99.9 percent by weight of a solvent or solvent mixture,
C) 0 to 10 percent by weight of a dye or dye mixture, the percentage being in relation to the dry weight,
D) 0 to 10 percent by weight of a functional material or of a mixture of functional materials,
E) 0 to 30 percent by weight of additives and/or auxiliary agents, or of a mixture of such substances,
the total of components A) to E) always amounting to 100 percent by weight,
as inkjet ink.

2. The use according to claim 1, wherein the polycarbonate derivative contains functional carbonate structural units of Formula (I), 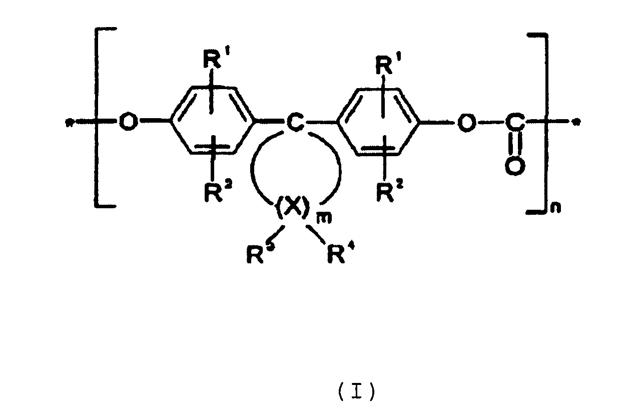 wherein R¹ and R² independently of one another represent hydrogen, halogen, preferred chlorine or bromine, C₁-C₈ alkyl, C₅-C₆ cycloalkyl, C₆-C₁₀ aryl, preferred phenyl, and C₇-C₁₂ aralkyl, preferred phenyl C₁-C₄ alkyl, in particular benzyl,
m is an integer from 4 to 7, preferred 4 or 5,
R3 and R4 are individually selectable for each X, independently of one another hydrogen or C₁-C₆ alkyl,
X is carbon, and
n is an integer greater than 20,
with the proviso that R³ and R⁴ on at least one X atom are simultaneously alkyl.

3. The use according to claim 2, wherein R³ and R⁴ on 1 to 2 X atoms, in particular only on one X atom, are simultaneously alkyl, or
R³ and R⁴ are methyl.

4. The use according to one of claims 2 to 3, wherein the X atoms in the alpha position to the diphenyl-substituted C atom (C1) are not substituted with dialkyl.

5. The use according to one of claims 2 to 4, wherein the X atoms in the beta position to C1 are disubstituted with alkyl.

6. The use according to one of claims 2 to 5, wherein the polycarbonate derivative is based on 4,4'-(3,3,5-trimethylcyclohexan-1,1-diyl)diphenol, 4,4'-(3,3-dimethylcyclohexan-1,1-diyl)diphenol, or 4,4'-(2,4,4-trimethylcyclopentan-1,1-diyl)diphenol.

7. The use according to one of claims 1 to 6, wherein the polycarbonate derivative contains a copolymer, in particular consists of, monomer units M1 based on Formula (Ib), for instance based on bisphenol A, as well as monomer units M2 based on the geminally disubstituted dihydroxy diphenyl cycloalkane, preferably of the 4,4'-(3,3,5-trimethyl cyclohexane-1,1-diyl)diphenol, wherein the molar ratio M2/M1 preferably is greater than 0.3, in particular greater than 0.40, preferably greater than 0.50.

8. The use according to one of claims 1 to 7, wherein the component B) consists of a liquid aliphatic, cycloaliphatic, and/or aromatic hydrocarbon, a liquid organic ester, and/or of a mixture of such substances.

9. The use according to claim 8, wherein the component B) consists of:
L1) 0 to 10 percent by weight, preferably 1 to 5 percent by weight, in particular 2 to 3 percent by weight, of mesitylene,
L2) 10 to 50 percent by weight, preferably 25 to 50 percent by weight, in particular 30 to 40 percent by weight, of 1-methoxy-2-propanolacetate,
L3) 0 to 20 percent by weight, preferably 1 to 20 percent by weight, in particular 7 to 15 percent by weight, of 1,2,4-trimethylbenzene,
L4) 10 to 50 percent by weight, preferably 25 to 50 percent by weight, in particular 30 to 40 percent by weight, of ethyl-3-ethoxypropionate,
L5) 0 to 10 percent by weight, preferably 0.01 to 2 percent by weight, in particular 0.05 to 0.5 percent by weight, of cumene, and
L6) 0 to 80 percent by weight, preferably 1 to 40 percent by weight, in particular 15 to 25 percent by weight, of solvent naphtha,
the total of components L1 to L6 always amounting to 100 percent by weight.

10. The use according to one of claims 1 to 9, the preparation containing
A) 0.1 to 10 percent by weight, in particular 0.5 to 5 percent by weight, of a binder comprising a polycarbonate derivative based on a geminally disubstituted dihydroxy diphenyl cycloalkane,
B) 40 to 99.9 percent by weight, in particular 45 to 99.5 percent by weight, of an organic solvent or solvent mixture,
C) 0.1 to 6 percent by weight, in particular 0.5 to 4 percent by weight, of a dye or dye mixture,
D) 0.001 to 6 percent by weight, in particular 0.1 to 4 percent by weight, of a functional material or of a mixture of functional materials,
E) 0.1 to 30 percent by weight, in particular 1 to 20 percent by weight, of additives and/or auxiliary agents, or of a mixture of such substances.

11. A method for the production of a laminate comprising at least one first polymer layer as well as, optionally, a second polymer layer, each made of a polycarbonate polymer based on bisphenol A, wherein on the first polymer layer an inkjet printing layer is arranged, comprising the following steps:
a) on at least a section of the first polymer layer, the inkjet printing layer made of a preparation according to one of claims 1 to 15 is applied,
b) optionally, the inkjet printing layer is dried,
c) optionally after step a) or step b), the second polymer layer is placed on the first polymer layer, covering the inkjet printing layer, and the first polymer layer and the second polymer layer are laminated with one another under pressure at a temperature from 120 °C to 230 °C and for a defined time.

12. The use of a method according to claim 11 for producing a security and/or valuable document, wherein optionally simultaneously with, before or after the production of the laminate the first polycarbonate layer and/or the second polycarbonate layer are stacked and directly or indirectly connected with another layer, for instance a supporting layer.

13. A method for the production of a laminate comprising at least one polymer layer as well as an injection molded part made of a polymer material, wherein between the polymer layer and the injection molded part an inkjet printing layer is arranged, comprising the following steps:
a) on at least a section of the polymer layer, the inkjet printing layer made of a preparation according to one of claims 1 to 15 is applied,
b) optionally, the inkjet printing layer is dried,
c) after step a) or step b), the polymer layer is placed in an injection mold, the inkjet printing layer showing toward inside,
d) the polymer material is injected into the injection mold at a temperature of at least 60 °C, and
e) after cooling to a temperature of at least 20 °C below the temperature of step d), the laminate is removed from the injection mold.

14. The method according to claim 13, wherein the temperature in step d) is in the range from 80 °C to 200 °C, in particular in the range from 100 °C to 180 °C, and/or wherein the temperature in step e) is at least 40 °C below the temperature in step d) .

15. The method according to one of claims 13 to 14, wherein the thickness of the polycarbonate layer is in the range from 10 to 1,000 µm, in particular from 20 to 200 µm, or
wherein the thickness, measured in directions orthogonal to a main face of the polycarbonate layer, of the inkjet printing layer is in the range from 0.01 to 10 µm, in particular 0.05 to 5 µm.

## Revendications

1. Utilisation d'une préparation, contenant:
A) 0,1 à 20 % en poids d'un agent de liage comprenant un dérivé de polycarbonate sur la base d'un dihydroxy-diphényle-cycloalcane disubstitué de manière géminée,
B) 30 à 99,9 % en poids d'un solvant ou d'un mélange de solvants,
C) 0 à 10 % en poids d'un colorant ou d'un mélange de colorants, le pourcentage étant en relation au poids sec,
D) 0 à 10 % en poids d'un matériau fonctionnel ou d'un mélange de matériaux fonctionnels,
E) 0 à 30 % en poids d'additifs et/ou d'agents auxiliaires, ou d'un mélange de telles substances,
la somme des composants A) à E) étant toujours égale à 100 % en poids,
comme encre pour jet d'encre.

2. Utilisation selon la revendication 1, dans laquelle le dérivé de polycarbonate contient des unités structurelles fonctionnelles de carbonate de la formule (I), 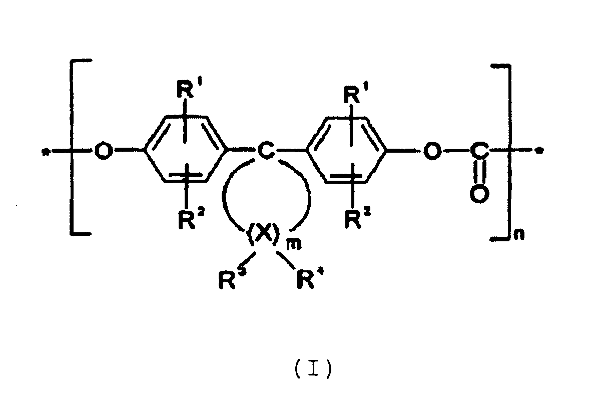 dans laquelle R¹ et R² représentent indépendamment l'un de l'autre hydrogène, halogène, de préférence chlore ou brome, alkyle en C₁ à C₈, cycloalkyle en C₅ à C₆, aryle en C₆ à C₁₀, de préférence phényle, et aralkyle en C₇ à C₁₂, de préférence phényle-alkyle en C₁ à C₄, en particulier benzyle,
m est un entier compris entre 4 et 7, de préférence 4 ou 5,
R3 et R4 sont individuellement choisissables pour chaque X, indépendamment l'un de l'autre hydrogène ou alkyle en C₁ à C₆,
X est carbone, et
n est un entier supérieur à 20,
pourvu que R³ et R⁴ sur au moins un atome X sont simultanément alkyle.

3. Utilisation selon la revendication 2, dans laquelle R³ et R⁴ sur 1 à 2 atomes X, en particulier seulement sur un atome X, sont simultanément alkyle, ou
R³ et R⁴ sont méthyle.

4. Utilisation selon une des revendications 2 à 3, dans laquelle les atomes X dans la position alpha à l'atome C (C1) substitué en diphényle ne sont pas substitués en dialkyle.

5. Utilisation selon une des revendications 2 à 4, dans laquelle les atomes X dans la position bêta à C1 sont disubstitués en alkyle.

6. Utilisation selon une des revendications 2 à 5, dans laquelle le dérivé de polycarbonate est sur la base de 4,4'-(3,3,5-triméthylecyclohexane-1,1-diyl)diphénol, 4,4'-(3,3-diméthylecyclohexane-1,1-diyl)diphénol, ou 4,4'-(2,4,4-triméthylecyclopentane-1,1-diyl)diphénol.

7. Utilisation selon une des revendications 1 à 6, dans laquelle le dérivé de polycarbonate contient un copolymère, en particulier se compose d'unités monomères M1 sur la base de la formule (Ib), par exemple sur la base de bisphénol A, aussi bien que d'unités monomères M2 sur la base du dihydroxy-diphényle-cycloalcane disubstitué de manière géminée, de préférence du 4,4'-(3,3,5-triméthylecyclohexane-1,1-diyl) diphénol, la proportion molaire M2/M1 de préférence étant supérieure à 0,3, en particulier supérieure à 0,40, de préférence supérieure à 0,50.

8. Utilisation selon une des revendications 1 à 7, dans laquelle le composant B) consiste en un hydrocarbure aliphatique, cycloaliphatique et/ou aromatique liquide, un ester organique liquide et/ou un mélange de telles substances.

9. Utilisation selon la revendication 8, dans laquelle le composant B) consiste en:
L1) 0 à 10 % en poids, de préférence 1 à 5 % en poids, en particulier 2 à 3 % en poids, de mésitylène,
L2) 10 à 50 % en poids, de préférence 25 à 50 % en poids, en particulier 30 à 40 % en poids, de 1-méthoxy-2-propanolacétate,
L3) 0 à 20 % en poids, de préférence 1 à 20 % en poids, en particulier 7 à 15 % en poids, de 1,2,4-triméthylebenzène,
L4) 10 à 50 % en poids, de préférence 25 à 50 % en poids, en particulier 30 à 40 % en poids, d'éthyle-3-éthoxypropionate,
L5) 0 à 10 % en poids, de préférence 0,01 à 2 % en poids, en particulier 0,05 à 0,5 % en poids, de cumène, et
L6) 0 à 80 % en poids, de préférence 1 à 40 % en poids, en particulier 15 à 25 % en poids, de solvant naphta,
la somme des composants L1 à L6 étant toujours égale à 100 % en poids.

10. Utilisation selon une des revendications 1 à 9, la préparation contenant
A) 0,1 à 10 % en poids, en particulier 0,5 à 5 % en poids, d'un agent de liage comprenant un dérivé de polycarbonate sur la base d'un dihydroxy-diphénylecycloalcane disubstitué de manière géminée,
B) 40 à 99,9 % en poids, en particulier 45 à 99,5 % en poids, d'un solvant organique ou d'un mélange de solvants organiques,
C) 0,1 à 6 % en poids, en particulier 0,5 à 4 % en poids, d'un colorant ou d'un mélange de colorants,
D) 0,001 à 6 % en poids, en particulier 0,1 à 4 % en poids, d'un matériau fonctionnel ou d'un mélange de matériaux fonctionnels,
E) 0,1 à 30 % en poids, en particulier 1 à 20 % en poids, d'additifs et/ou d'agents auxiliaires ou d'un mélange de telles substances.

11. Procédé de production d'un matériau composite comprenant au moins une première couche polymérique aussi bien que, optionnellement, une deuxième couche polymérique, chacune en un polymère de polycarbonate sur la base de bisphénol A, sur la première couche polymérique une couche imprimée pour jet d'encre étant disposée, comprenant les étapes suivantes:
a) sur au moins une section de la première couche polymérique, la couche imprimée pour jet d'encre d'une préparation selon une des revendications 1 à 15 est appliquée,
b) optionnellement, la couche imprimée pour jet d'encre est séchée,
c) optionnellement après l'étape a) ou l'étape b), la deuxième couche polymérique est mise en place sur la première couche polymérique, en recouvrant la couche imprimée pour jet d'encre, et la première couche polymérique et la deuxième couche polymérique sont liées l'une avec l'autre sous pression à une température comprise entre 120 °C et 230 °C et pendant un temps défini.

12. Utilisation d'un procédé selon la revendication 11 pour la production d'un document de sécurité et/ou de valeur, dans laquelle optionnellement simultanément avec, avant ou après la production du matériau composite la première couche de polycarbonate et/ou la deuxième couche de polycarbonate sont empilées et liées directement ou indirectement avec au moins une autre couche, par exemple une couche d'appuie.

13. Procédé de production d'un matériau composite comprenant au moins une couche polymérique aussi bien qu'une pièce moulée par injection en un matériau polymérique, entre la couche polymérique et la pièce moulée par injection une couche imprimée pour jet d'encre étant disposée, comprenant les étapes suivantes:
a) sur au moins une section de la première couche polymérique, la couche imprimée pour jet d'encre d'une préparation selon une des revendications 1 à 15 est appliquée,
b) optionnellement, la couche imprimée pour jet d'encre est séchée,
c) après l'étape a) ou l'étape b), la couche polymérique est mise en place dans un moule d'injection, la couche imprimée pour jet d'encre étant dirigée vers l'intérieur,
d) le matériau polymérique est injecté dans le moule d'injection à une température d'au moins 60 °C, et
e) après refroidissement à une température d'au moins 20 °C inférieure à la température de l'étape d), le matériau composite est enlevé du moule d'injection.

14. Procédé selon la revendication 13, dans lequel la température dans l'étape d) est dans la gamme comprise entre 80°C et 200°C, en particulier dans la gamme comprise entre 100 °C et 180°C, et/ou dans laquelle la température dans l'étape e) est au moins de 40 °C inférieure à la température dans l'étape d).

15. Procédé selon une des revendications 13 à 14, dans lequel l'épaisseur de la couche de polycarbonate est dans la gamme comprise entre 10 et 1000 µm, en particulier dans la gamme comprise entre 20 et 200 µm, ou
dans lequel l'épaisseur, mesurée dans des directions orthogonales à une face principale de la couche de polycarbonate, de la couche imprimée pour jet d'encre est dans la gamme comprise entre 0,01 et 10 µm, en particulier dans la gamme comprise entre 0,05 et 5 µm.
